Europäisches Patentamt

European Patent Office

Office européen des brevets

(19)

(11) EP 0 809 826 B1

(12) **EUROPÄISCHE PATENTSCHRIFT**

(45) Veröffentlichungstag und Bekanntmachung des Hinweises auf die Patenterteilung:
**09.09.1998 Patentblatt 1998/37**

(21) Anmeldenummer: **96902218.5**

(22) Anmeldetag: **06.02.1996**

(51) Int Cl.⁶: **G06F 5/06**

(86) Internationale Anmeldenummer:
**PCT/DE96/00179**

(87) Internationale Veröffentlichungsnummer:
**WO 96/25703 (22.08.1996 Gazette 1996/38)**

(54) **ÜBERGABEOPTIMIERUNG VON DATENWORTFOLGEN**

OPTIMIZATION OF THE TRANSFER OF DATA WORD SEQUENCES

OPTIMISATION DU TRANSFERT DE SEQUENCES DE MOTS D'INFORMATION

(84) Benannte Vertragsstaaten:
**DE FR GB**

(30) Priorität: **15.02.1995 DE 19505095**

(43) Veröffentlichungstag der Anmeldung:
**03.12.1997 Patentblatt 1997/49**

(73) Patentinhaber: **Siemens Nixdorf Informationssysteme AG**
**33106 Paderborn (DE)**

(72) Erfinder: **HEINRICHS, Hans-Jürgen**
**33184 Altenbeken (DE)**

(74) Vertreter: **Epping, Wilhelm, Dr.-Ing. et al**
**Patentanwalt**
**Postfach 22 13 17**
**80503 München (DE)**

(56) Entgegenhaltungen:
**EP-A- 0 247 317        US-A- 5 210 829**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Technisches Gebiet

Das Verfahren betrifft die Kopplung von Datenworttransfereinrichtungen in Computersystemen, insbesondere die Ankopplung von Bussystemen verschiedener Geschwindigkeit.

Stand der Technik

Um zwei Bussysteme mit verschiedenen Datengeschwindigkeiten zu koppeln, werden als FIFO bezeichnete Speicherbausteine, z.B. der Typ 74ALS2233 der Firma Texas Instruments, verwendet. Diese Bausteine besitzen einen Speicher mit zwei Zugriffspfaden, über die gleichzeitig ein Sender Daten einspeichern und ein Empfänger Daten auslesen kann. Durch im Baustein enthaltene Zähler werden die Daten in der Reihenfolge ausgegeben, in der sie eingespeichert werden. Dabei stellt der Baustein Signale bereit, die den vollen Zustand des Eingangsteils und den leeren Zustand des Ausgangsteils anzeigen. Durch das erstere Signal wird der Sender angehalten, wenn der Empfänger nicht schnell genug die Daten abholen konnte. Durch das zweite Signal wird der Empfänger veranlaßt, die Daten zu übernehmen. Falls der Sender die Datenworte in Paketen sendet, in denen die Datenworte schneller aufeinanderfolgen, als sie der Empfänger verarbeiten kann, aber zwischen Datenpaketen seitens des Senders eine größere Pause entsteht, kann so der Empfänger die Daten mit einer mittleren Geschwindigkeit verarbeiten. Falls der Empfänger eine höhere Abnahmegeschwindigkeit als der Sender hat, ist häufig ein Füllgradsignal von beispielsweise der Hälfte vorhanden. Erst wenn der Pufferspeicher zur Hälfte gefüllt ist, wird der Empfänger zur Abnahme gestartet und nimmt dann solange Daten ab, bis der Pufferspeicher leer geworden ist. Häufig arbeiten hierbei Sender und Empfänger im Asynchronbetrieb, bei dem der Sender zu nicht vorherbestimmten Zeitpunkten sendet und der Empfänger zwischen zwei Datenworten eine variabel lange Pause zuläßt.

In Rechenanlagen und insbesondere beim Zugang zu Bussystemen werden Anordnungen benutzt, bei denen Datenpakete, bestehend aus einer vorgegebenen Anzahl von Datenworten, ohne Unterbrechung übertragen werden, auch Synchronbetrieb genannt. Bei unterschiedlichen Taktraten von Sender und Empfänger werden auch hier die oben genannten FIFO Pufferspeicher eingesetzt.

Eine bekannte Anwendung von FIFO Speichern in synchronen Bussystemen besteht darin, zunächst das gesamte Datenpaket in den Pufferspeicher einzuspeichern und mit dem Ende des Datenpakets, wenn alle Datenworte im Speicher vorliegen, die Übertragung an den Empfänger zu veranlassen. Die Übertragungsgeschwindigkeit dieser Anordnung liegt jedoch wesentlich unter der des Senders bzw. Empfängers. Wegen der synchronen Betriebsart kann im Gegensatz zu der asynchronen Betriebsart die Übertragung zum Empfänger (der Datensenke) erst erfolgen, wenn sichergestellt ist, daß das Datenpaket ohne Unterbrechung gesendet werden kann. Dies ist mit Sicherheit der Fall, wenn der Sendevorgang seitens der Datenquelle abgeschlossen ist. Der Verlust an Bandbreite entspricht daher bei diesem einfachen Verfahren der Dauer der Datenübertragung auf dem schnelleren Bus.

Eine Verbesserung kann erreicht werden, indem die Ausgabe an den Empfänger bereits begonnen wird, obwohl der Sender noch nicht alle Daten übertragen hat. Da der Sender kontinuierlich sendet, kann bei vorbestimmtem Sende- und Empfangstaktrate der Füllgrad des Pufferspeichers vorab berechnet werden, ab dem die Übertragung an den Empfänger begonnen werden kann. Die Berechnung des Füllgrads hat dabei die ungünstigsten Randbedingungen, also bei gegenüber dem Empfänger langsamen Sender die langsamste Eingabetaktrate und die schnellste Ausgabetaktrate anzunehmen. Ist die Eingabetaktrate höher als die angenommene langsamste Eingabetaktrate, so startet die Ausgabe an den Empfänger später als optimal. Damit entsteht eine verlorene Wartezeit oder Verzögerung für den Sender zwischen zwei Datenpakten.

Beispielsweise beim Betrieb einer Zentraleinheit an einem Peripheriebus kann die Taktrate auf dem Bus vom Sender umgeschaltet werden. Der Pufferspeicher muß dann für das langsamste Peripheriegerät ausgelegt werden, womit schnellere Peripheriegeräte keine maximale Folgefrequenz von Datenpaketen erreichen können und daher nicht optimal angeschlossen sind.

In der europäischen Patentschrift EP 0 247 317 wird ein Verfahren zur Kopplung eines schnellen an einen langsamen Kanal angegeben, bei dem der Datentransfer beginnt, wenn ein Schwellwert erreicht ist, der entsprechend vorherigen Transfers eingestellt wird.

Aufgabe der Erfindung ist es daher, einen Pufferspeicher in Systemen mit kontinuierlicher Übertragung von Datenpaketen so zu betreiben, daß auch bei unterschiedlichen Taktraten eine nahezu verzögerungsfreie Übertragung erreicht wird.

Darstellung der Erfindung

Die Erfindung benutzt eine Meß- und Rechenschaltung, bei der die Ausgangstaktrate in Bezug zur Eingangstaktrate gesetzt und hierdurch ein Startwert in Ausgangstakten bestimmt wird. Hierzu wird die Anzahl der Ausgangstakte während einer bekannten Anzahl von Eingangstakten bestimmt, durch die der Anzahl der Eingangstakte ensprechenden Anzahl der Datenpakete geteilt, Eins addiert und die Datenpaketlänge subtrahiert. Der sich ergebende Wert stellt die Anzahl der Ausgangstakte dar, die nach Beginn der Übertragung verstreichen müssen, bevor die Übertragung an den Empfänger beginnen kann.

Die Erfindung ist also ein Verfahren bzw. eine Anordnung zur Pufferung zwischen zwei synchron getakteten, Datenpakete von Datenwörtern sendenden und empfangenden Einrichtungen, wobei die Ausgabe freigegeben wird, sobald die Anzahl der Ausgangstakte nach Beginn eines Datenpakets eine zuvor durch Messung der Ausgangtakte in Abhängigkeit von den Eingangtakten bestimmten Startwert überschreitet.

In der bevorzugten Anwendung sind dabei die Anzahl der Datenworte pro Paket und die Anzahl der gemessenen Eingangtakte eine Potenz von Zwei, wodurch sich die Multiplikationen und Divisionen durch Verschaltung realisieren lassen und auch bei Hochgeschwindikeits-Bussystemen leicht realisierbar sind.

Kurzbeschreibung der Zeichnungen

Es zeigen

Fig. 1    eine Schaltung zur Kopplung von einer Datenquelle mit einer Datensenke,

Fig. 2    ein Signaldiagramm bei Datentransfer mit der Schaltung nach Fig. 1,

Fig. 3    ein Signaldiagramm bei der Bestimmung des Startwerts mit der Schaltung nach Fig. 1,

Fig. 4    ein Signaldiagramm bei Datentransfer mit der Schaltung nach Fig. 1 gemäß der Erfindung,

Fig. 5    eine alternative Schaltung zu einem Teil von Fig. 1.

Detaillierte Beschreibung der Erfindung

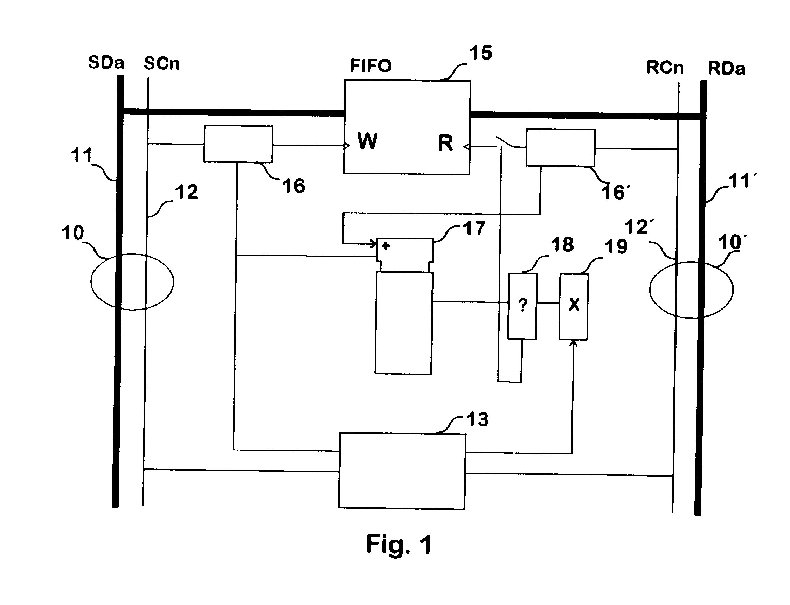

In Fig. 1 ist eine Schaltung zur Übertragung von Datenpaketen zwischen zwei Bussystemen dargestellt. Eine Datenquelle, die der Übersichtlichkeit halber nicht dargestellt ist, benutzt ein Bussystem 10 mit einem Quelldatenleitungsstrang 11 (SDa) und dazugehörigen Steuerleitungen 12 (SCn). Die Datensenke benutzt gleichfalls ein Bussystem 10' mit Datenleitungen 11' (RDa) und Steuerleitungen 12' (RCn). Ein Pufferspeicher 15 (FIFO) bekannter Art, z.B. der Typ 74ALS2233 der Firma Texas Instruments, ist sowohl mit den Quelldatenleitungen 11 als auch mit den Zieldatenleitungen 11' verbunden. Aus den Signalen auf den Steuerleitungen 12 erzeugt eine Ansteuerschaltung 16 ein Signal für den Pufferspeicher 15, der an dessen Übernahme-Eingang W gelegt ist, und Signale für die Steuerschaltung 13, die weiter unten genauer beschrieben werden. Eine weitere Ansteuerschaltung 16' erzeugt das Übernahmensignal für das Lesen aus dem Pufferspeicher 15 und ist daher mit dessen Eingang R verbunden. Gleichzeitig erzeugt sie die Bussteuersignale für die Steuerleitungen 12' des Bussystems 10' für die Datensenke.

Im folgenden soll stets angenommen werden, daß die Bussysteme insofern synchron arbeiten, als die Taktsignale gleichmäßig kontinuierlich anliegen. Ferner wird angenommen, daß die Datenübertragung in Paketen erfolgt, daß also mehrere Datenworte mit einer Anzahl von Bits, die die Anzahl der Datenleitungen nicht übersteigt, mit aufeinanderfolgenden Taktsignalen der Bussysteme erfolgen. Dabei haben die Taktsignale der Bussysteme in der Regel weder die gleiche Frequenz noch eine feste Phasenbeziehung zueinander, was bei der Interpretation der Figuren zu berücksichtigen ist.

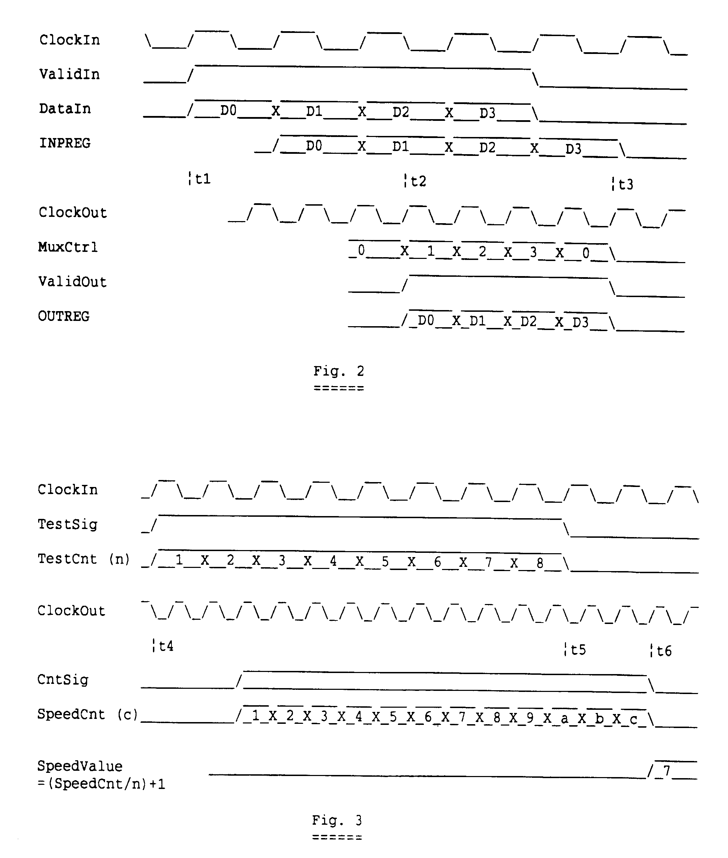

Der optimale Betrieb dieser Buskopplung ist in Fig. 2 dargestellt, wobei angenommen ist, daß der Sender langsamer ist als der Empfänger. Durch die Steuersignale 12 (SCn), die auch den Sendetakt ClockIn bestimmen, wird festgestellt, daß zu dem Zeitpunkt $t_1$ ein Datenpaket von vier Datenwörtern D0, D1, D2, D3 übertragen werden soll, was durch das Signal ValidIn angezeigt wird. Die Datenwörter werden mit den vier unmittelbar darauffolgenden Takten in den Pufferspeicher übernommen. Das Signal DataIn steht für die Daten auf dem 3us 10 der Datenquelle und das Signal INPREG für die Daten in dem Pufferspeicher FIFO. Idealerweise wird der Datentransfer zu der Datensenke erst zum Zeitpunkt $t_2$ begonnen, der so spät gewählt ist, daß beide Datentransfers zu dem Zeitpunkt $t_3$ abgeschlossen sind. Das Signal ClockOut repräsentiert den Takt, das Signal ValidOut das Steuersignal und das Signal OutReg die Daten auf dem Bus 10' der Datensenke.

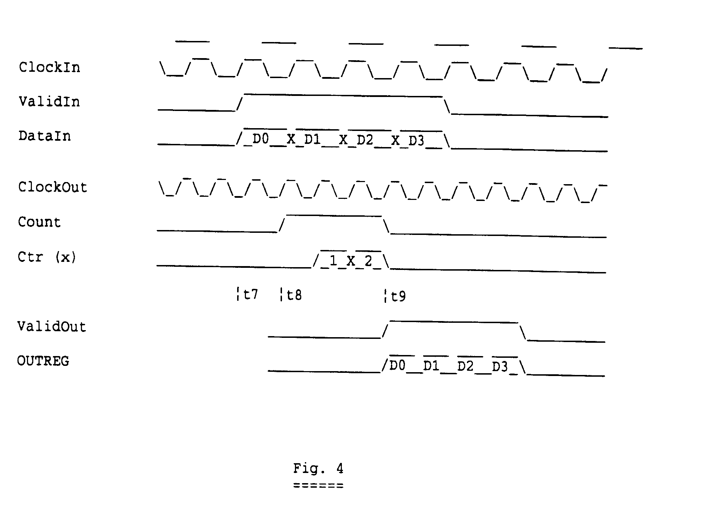

Die Messung zur Bestimmung des optimalen Startzeitpunktes ist in Fig. 3 dargestellt. Das Signal ClockIn stellt wieder den Takt auf dem Bus der Datenquelle dar, der auf Grund des Synchronbetriebs kontinuierlich anliegt, ohne daß dabei ein Datentransfer erfolgt. Der Bus befindet sich also bereits im Synchron-Modus, in dem der Takt ClockIn zu äquidistanten Zeitpunkten anliegt und die Frequenz diejenige ist, mit der auch die nachfolgenden Datentransfers erfolgen werden. Bei wechselnden Taktraten erzeugt daher die Steuerung 13 intern ein Signal, das den synchronisierten Zustand des Busses 10 repräsentiert und nicht dargestellt ist. Aus diesem Signal wird nun ein Meßsignal TestSig erzeugt, das mit dem Eingangstakt ClockIn synchronisiert ist und eine vorbestimmte Anzahl n von Taktpulsen andauert. Diese Anzahl n ist im Prinzip frei wählbar; jedoch sind die nachfolgenden Schritte einfacher zu realisieren, wenn sie ein Vielfaches der Anzahl der Datenworte pro Datenpaket ist. Diese Anzahl der Datenworte pro Datenpaket kann entweder während der Entwurfsphase des Rechnersystems bestimmt werden, in der meist erkennbar ist, welche Datenpakete häufig vorkommen. Sie kann auch während des Betriebs dynamisch ermittelt werden. Sind mehrere Paketlängen zu erwarten, kann als Vielfaches auch sinnvollerweise das kleinste gemeinsame Vielfache verwendet werden. Bei der überwiegenden Zahl von Rechnern wird die Datenpaketlänge eine Potenz von zwei sein. Damit ergibt sich für die Anzahl n ein günstiger Wert von 8 oder 16.

Während der durch die Anzahl n bestimmten Zeit des Meßsignals TestSig wird die Anzahl der Takte auf dem Empfangsbus 10' gezählt. Das Signal TestSig stellt also das Freigabesignal für einen Zähler dar, welcher mit seinem Zähleingang mit dem Taktsignal des Busses 10' der Datensenke verbunden ist. In dem Beispiel in Fig. 3 wurde eine Anzahl n=8 gewählt und es wurde eine Zahl c=12 von Takten auf dem Empfangsbus 10' gezählt, durch das Signal SpeedCnt in Fig. 3 dargestellt.

In einer ersten Ausführungsform wird die so erhaltene Zahl unmittelbar durch die Anzahl der Datenpakete pro Meßintervall geteilt, im Beispiel von Fig. 2 ist das die Zahl 8 durch 4 gleich 2; dies ergibt im Beispiel die Zahl 6. Die Division mit Abschneiden durch 2 kann in bekannter einfacher Weise durch Verschaltung erfolgen. Um den durch den Phasenversatz der beiden Bustakte bewirkten Fehler auszugleichen, wird diese Zahl noch um Eins erhöht. Größere Summanden sind möglich, aber meist nicht optimal. Diese erhöhte Zahl, im Beispiel die Zahl 7, wird sodann in einem Register abgestellt. Der Meßwert kann auch unverändert zunächst in einem Register und später durch die Zahl der Takte pro Datenblock geteilt und um Eins erhöht werden, wenn verschiedene Blockgrößen bei unveränderter Taktrate auftreten können.

Ein Datentransfer in Anschluß an die beschriebene Meßphase ist in Fig. 4 dargestellt. Der Beginn des Sendens, d.h. des Datentransfers auf dem Eingangsbus 10, wird durch die Aktivierung des Signals ValidIn dargestellt. Der übernächste Ausgangs-Taktimpuls übernimmt das Signal ValidIn und erzeugt damit das Signal Count, welches einen Zähler freigibt, der die Anzahl der Takte auf dem Bus 10 für die Datensenke zählt. Hat dieser Zähler 17 den ermittelten Verzögerungswert x erreicht, der zuvor als Differenz zwischen dem in der Meßphase nach Fig. 2 ermittelten Wert und der Anzahl der Datenworte pro zu übertragendem Datenblock bestimmt wurde, so wird das Signal ValidOut erzeugt und bewirkt die Übertragung der Daten aus dem Pufferspeicher 15 mittels des Busses 10' an die Datensenke.

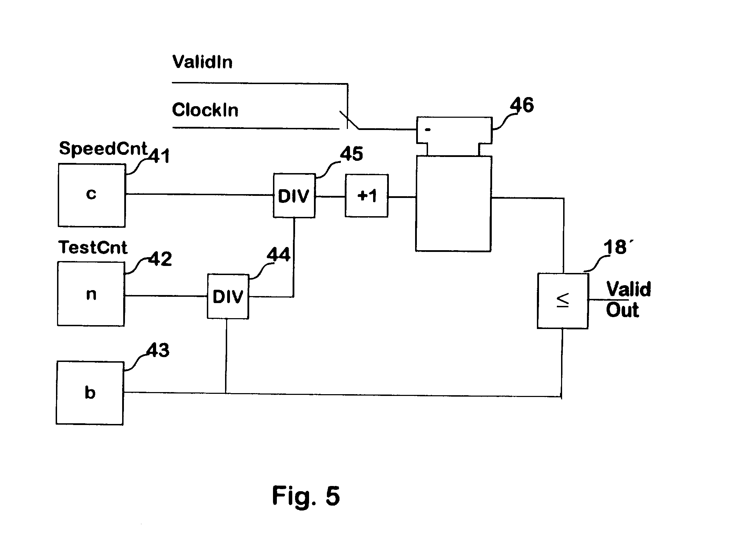

In Fig. 5 ist eine alternative Schaltung zur Erzeugung der Wartezeit zwischen Beginn der Übertragung des Senders (t1) und Begin der Übertragung zum Empfänger (t2) gezeigt. Dabei wird der Zähler 17 durch einen Abwärts zähler 46 ersetzt und der Vergleich 18 durch einen Vergleich 18' des Stands des Abwärtszählers 46 mit der in einem Register 43 gespeicherten Anzahl der Datenworte pro Datenblock. Zunächst wird, wie bislang auch, die für die Messung vorgegebene Zahl n von Takten (Register 42) auf dem Bus 10 der Datenquelle durch die Anzahl b der Datenwörter pro Datenblock (Register 43) dividiert. Ist letztere eine Potenz von 2, so erfolgt die Division durch einen als Schieberegister wirkenden Multiplexer. Andernfalls kann bei der geringen Größe der fraglichen Zahlen auch eine Division durch Adressierung eines Festwertspeichers erfolgen, bei der der Dividend und Divisor zusammen die Adresse des Festwertspeichers darstellen und das gespeicherte Datenwort den, bedarfsweise gerundeten, Quotienten ausgibt. Dieser so erhaltene Quotient n/b wird als Divisor für eine zweite Division eingesetzt, bei der die gemessene Zahl c (Register 41) durch den Quotienten n/b dividiert wird. Auch hier ist je nach Rahmenbedingungen ein Multiplexer oder ein Festwertspeicher vorzusehen. Der Quotient wird um Eins erhöht. Dieses Ergebnis, welches in Fig. 2 die Bezeichnung SpeedValue hat, wird nun direkt in den Abwärtszähler 46 geladen, welcher mit Beginn des Transfers von der Datenquelle mit dem Takt des anderen, nämlich des Busses der Datensenke, erniedrigt wird. Der Zählerstand wird mit der Anzahl der Datenworte pro Datenblock verglichen. Solange der Zählerstand größer ist, bleibt der Transfer zur Datensenke gesperrt. Ist er gleich oder kleiner, wird der Transfer zur Datensenke freigegeben. Ob dieser Transfer unmittelbar beginnt oder wegen Verstopfung der Datensenke noch verzögert wird, ist dann ohne Bedeutung. Es wird auf jeden Fall sichergestellt, daß der früheste Zeitpunkt, ab dem der Datentransfer zur Datensenke möglich ist, auch bei großen Busgeschwindigkeiten sicher bestimmt wird und nahe dem optimalen Wert liegt.

Technisch äquivalent zu der Addition der Konstanten 1 nach der Division ist es, den Zähler mit dem Divisor oder Divisor minus 1 vorzuladen und so die Addition der Konstanten 1 ganz zu ersparen.

**Patentansprüche**

1. Verfahren zur Geschwindigkeitsanpassung des Transfers von Paketen von Datenworten zwischen einer Datenquelle und einer Datensenke, wobei die Datenquelle langsamer ist als die Datensenke, mit den Merkmalen:

   - die Datenquelle erzeugt Pakete von Datenworten, welche mit einem Eingangtakt in einen Pufferspeicher (15) eingelesen und mit einem Ausgangtakt zu der Datensenke ausgegeben werden,

   - die Datenworte eines Pakets werden sowohl beim Einlesen in den Pufferspeicher (15) als aus beim Ausgeben aus dem Pufferspeicher (15) mittels unmittelbar aufeinanderfolgender Takte transferiert,

   dadurch gekennzeichnet, daß

   - die Anzahl c der Ausgangstakte für eine vorgegebene Anzahl n von Eingangstakten durch Abzählen von Eingangstakten ermittelt wird,

   - das Ausgeben eines Pakets einer Paketlänge von b Datenworten aus dem Pufferspeicher (15) zu der Datensenke freigegeben wird, wenn die Anzahl der Ausgangstakte nach Beginn der Übertragung seitens der Datenquelle einen Vergleichswert x (19) erreicht, der durch die Formel

$$x = c / ( n / b ) - b + e$$

gegeben ist, wobei e eine vorzugweise als e=1 vorbestimmte Konstante ist.

2. Verfahren nach Anspruch 1, wobei der Wert c/(n/b)+e dadurch gebildet wird, daß anstelle der Addition von e das Abzählen der Eingangstake nicht mit Null, sondern mit einem Anfangswert beginnt, der bis auf eine additive Konstante gleich dem Divisor n/b ist.

3. Verfahren nach Anspruch 1 oder 2, wobei der Vergleichswert x vor Beginn des Transfers der Datenquelle bestimmt wird.

4. Verfahren nach Anspruch 1 oder 2, wobei ein Abwärtszähler (46) mit dem Wert c/(n/b)+e geladen, mit dem Ausgangstakt nach Beginn der Datenübertragung seitens der Datenquelle vermindert und mit der Paket länge b verglichen wird.

5. Verfahren nach einem der Ansprüche 1 bis 4, wobei die Anzahl c der Ausgangstakte für eine vorgegebene Anzahl n von Eingangstakten dadurch ermittelt wird, daß durch Abzählen von n Eingangstakten ein Testsignal erzeugt wird, aus welchem durch Übernahme mittels der Ausgangstakte ein Zählsignal erzeugt wird, welches einen Zähler für die Ausgangstakte freigibt, dessen Ergebnis die Anzahl c ist.

6. Anordnung zur Durchführung des Verfahrens nach einem der Ansprüche 1 bis 5 mit den Merkmalen:

- ein Pufferspeicher (15) ist mit einer Datenquelle und einer Datensenke über jeweils Daten- (11, 11') und Steuerleitungen (12, 12') verbunden, wobei die Steuerleitungen (12) der Datenquelle einen Eingangstakt erzeugen und eine Steuerung einen Ausgangstakt für die Steuerleitungen (12') der Datensenke erzeugt,
- sowohl Datenquelle als auch Datensenke sind so aufgebaut, daß sie Datenblöcke von Datenworten mit unmittelbar aufeinanderfolgenden jeweiligen Taktsignalen senden bzw. empfangen,

dadurch gekennzeichnt, daß

- eine Meßschaltung mit dem Eingangs- und dem Ausgangstakt verbunden ist,
- die Meßschaltung an einem Ausgang die Anzahl c der Ausgangstakte für eine vorgegebene Anzahl n der Eingangstakte bereitstellt,
- der Ausgang der Meßschaltung mit einem ersten Eingang einer Rechenschaltung verbunden ist und die Steuerschaltung mit einem zweiten Eingang der Rechenschaltung verbunden ist, über welchen zweiten Eingang die Anzahl der zu übertragenden Datenworte b bereitgestellt wird, und die an einem Ausgang einen Wert bereitstellt, der den Summanden

$$c / ( n / b )$$

enthält,

- der Ausgang der Rechenschaltung mit der Steuerschaltung verbunden ist, welche so aufgebaut ist, daß abhängig von dem von der Meßschaltung bereitgestellten Wert der Datentransfer von dem Pufferspeicher zu der Datensenke freigegeben wird, wenn die Anzahl x der Ausgangstakte nach Beginn der Übertragung seitens des Senders der Formel

$$x = c / ( n / b ) - b + e$$

genügt, wobei e eine vorzugweise als e=1 vorbestimmte Konstante ist.

7. Anordnung nach Anspruch 6, wobei der Wert c/(n/b)+e dadurch gebildet wird, daß anstelle der Addition von e das Abzählen der Eingangstake nicht mit Null, sondern mit einem Anfangswert beginnt, der bis auf eine additive Konstante gleich dem Divisor n/b ist.

8. Anordnung nach Anspruch 6 oder 7, wobei der Vergleichswert x (19) vor Beginn des Transfers des Senders bestimmt wird.

9. Anordnung nach Anspruch 6 oder 7, wobei ein Abwärtszähler (46) an einem Eingang mit der Rechenschaltung (44, 45) verbunden ist, welche den Wert c/(n/b)+e bereitstellt, der über ein Signal, welches den Beginn des Transfers seitens der Datenquelle anzeigt, geladen wird, und der Abwärtszähler (46) über eine Freigabeschaltung mit dem Ausgangstakt verbunden ist, so daß der Ausgangstakt den Wert vermindert, wenn die Freigabeschaltung den Beginn des Transfers seitens der Datenquelle anzeigt, und der Ausgang des Abwärtszählers mit der Paket länge b verglichen wird und der Ausgang dieses Vergleichers (18') mit Steuerungen verbunden ist, die den Datentransfer zur Datensenke freigeben, wenn der Inhalt des Abwärtszählers die Paketlänge b erreicht hat.

10. Anordnung nach einem der Ansprüche 6 bis 9, wobei die Meßschaltung einen ersten Zähler enthält, der die vorgegebene Anzahl n von Eingangstakten abzählt und so ein Zählsignal bereitstellt, welches durch den Ausgangstakt übernommen wird und so in Phase mit dem Ausgangstakt gebracht ist, seinerseits mit einem Freigabeeingang eines zweiten Zählers verbunden ist, der die Ausgangstakte für die Dauer des eingephaseten Zählsignals zählt, und von diesem zweiten Zähler, insbesodere durch Vorgabe eines Anfangswerts von Eins, die Anzahl der Ausgangstakte plus Eins als Zahl c an die Rechnerschaltung weitergegeben wird.

**Claims**

1. Method for matching the speed of transfer of packets of data words between a data source and a data sink, the data source being slower than the data sink, having the features:

   - the data source produces packets of data words which are read to a buffer store (15) by an input clock and are output to the data sink by an output clock,
   - the data words in a packet are transferred by means of directly successive clock cycles not only while reading to the buffer store (15) but also while outputting from the buffer store (15),

   characterized in that

   - the number c of output clock cycles for a predetermined number n of input clock cycles is determined by counting down input clock cycles,
   - the outputting of a packet with a packet length of b data words from the buffer store (15) to the data sink is enabled when the number of output clock cycles after the start of transmission by the data source reaches a comparison value x (19) which is given by the formula

   $$x = c / ( n / b ) - b + e$$

   e being a constant which is preferably preset to be e = 1.

2. Method according to Claim 1, the value c/(n/b)+e being formed in such a manner that, instead of the addition of e, the counting down of the input clock cycles does not start at zero but at an initial value which, except for an additive constant, is equal to the divisor n/b.

3. Method according to Claim 1 or 2, the comparison value x being determined before the start of the transfer from the data source.

4. Method according to Claim 1 or 2, a step-down counter (46) being loaded with the value c/(n/b)+e, being reduced by the output clock after the start of data transmission by the data source, and being compared with the packet length b.

5. Method according to one of Claims 1 to 4, the number c of the output clock cycles for a predetermined number n of input clock cycles being determined in that n input clock cycles are counted down to produce a test signal from which, by transfer by means of the output clock cycles, a counter signal is produced which enables a counter for the output clock cycles, whose result is the number c.

6. Arrangement for carrying out the method according to one of Claims 1 to 5 having the features:

   - a buffer store (15) is connected to a data source and to a data sink via respective data lines (11, 11') and control lines (12, 12'), the control lines (12) of the data source producing an input clock, and a controller producing an output clock for the control lines (12') of the data sink,
   - both the data source and the data sink are designed such that they respectively transmit and receive data blocks of data words with directly successive clock signals in each case,

   characterized in that

   - a measurement circuit is connected to the input clock and to the output clock,
   - at one output, the measurement circuit provides the number c of output clock cycles for a predetermined number n of input clock cycles,
   - the output of the measurement circuit is connected to a first input of a calculation circuit, and the control circuit is connected to a second input of the calculation circuit, via which second input the number of data words b to be transmitted is provided, and which calculation circuit provides at one output a value which contains the summand

   $$c / (n / b)$$

   - the output of the calculation circuit is connected to the control circuit, which is designed such that, irrespective of the value provided by the measurement circuit, the data transfer from the buffer store to the data sink is enabled when the number x of output clock cycles after the start of transmission by the transmitter satisfies the equation

   $$x = c / ( n / b ) - b + e$$

e being a constant which is preferably preset as e = 1.

7. Arrangement according to Claim 6, the value c/(n/b)+e being formed in that, instead of the addition of e, the counting down of the input clock cycles does not start at zero but at an initial value which, except for an additive constant, is equal to the divisor n/b.

8. Arrangement according to Claim 6 or 7, the comparison value x (19) being determined before the start of the transfer from the transmitter.

9. Arrangement according to Claim 6 or 7, a step-down counter (46) being connected at one input to the calculation circuit (44, 45), which provides the value c/(n/b)+e which is loaded via a signal which indicates the start of the transfer by the data source, and the step-down counter (46) being connected via an enable circuit to the output clock, such that the output clock reduces the value when the enable circuit indicates the start of the transfer by the data source, and the output of the step-down counter is compared with the packet length b, and the output of this comparator (18') is connected to controllers which enable the data transfer to the data sink when the content of the step-down counter has reached the packet length b.

10. Arrangement according to one of Claims 6 to 9, the measurement circuit containing a first counter which counts down the predetermined number n of input clock cycles and thus provides a count signal which is accepted by the output clock and is thus brought into phase with the output clock, for its part is connected to an enable input of a second counter which counts the output clock cycles for the duration of the in-phase count signal, and this second counter passing on, in particular by presetting an initial value of one, the number of output clock cycles plus one as the count c to the calculator circuit.

**Revendications**

1. Procédé pour adapter la vitesse du transfert de paquets de mots de données entre une source de données et un destinataire de données, la source de données étant plus lente que le destinataire de données, comportant les dispositions :

- la source de données produit des paquets de mots de données qui sont entrés à une cadence d'entrée dans une mémoire (15) tampon et qui sont envoyés au destinataire de données à une cadence de sortie,
- les mots de données d'un paquet sont transférés au moyen d'impulsions d'horloge qui se succèdent directement aussi bien lors de l'entrée dans la mémoire (15) tampon que lors de la sortie de la mémoire (15) tampon,

caractérisé en ce que

- on détermine le nombre c des impulsions de sortie pour un nombre n prescrit d'impulsions d'entrée en décomptant des impulsions d'entrée,
- on libère l'émission d'un paquet d'une longueur de paquet de b mots de données de la mémoire (15) tampon au destinataire de données si le nombre des impulsions de sortie, après le début de la transmission, atteint du côté de la source de données une valeur x de comparaison (19) qui est donnée par la formule

$$x = c / (n / b) - b + e$$

e étant une constante prédéterminée de préférence par e = 1.

2. Procédé suivant la revendication 1, la valeur c/(n/b)+e étant formée par le fait que, au lieu de l'addition de e, le décompte des impulsions d'entrée ne commence pas par zéro, mais par une valeur initiale qui est égale au diviseur n/b à une constante additive près.

3. Procédé suivant la revendication 1 ou 2, la valeur x de comparaison étant déterminée avant le début du transfert de la source de données.

4. Procédé suivant la revendication 1 ou 2, un compteur (46) décroissant étant chargé d'une valeur c/(n/b)+e, diminuée par l'impulsion de sortie après le début de la transmission de données du côté de la source de données et comparée à la longueur b de paquet.

5. Procédé suivant l'une des revendications 1 à 4, le nombre c des impulsions d'horloge de sortie pour un nombre n prescrit d'impulsions d'horloge d'entrée étant déterminé par le fait qu'il est produit par un décompte de n impulsions d'horloge d'entrée, un signal de test à partir duquel il est produit, par prise en charge au moyen des impulsions d'horloge de sortie, un signal de comptage qui libère un compteur qui est prévu pour les impulsions d'horloge de sortie et dont le résultat est le nombre c.

6. Dispositif pour mettre en oeuvre le procédé suivant l'une des revendications 1 à 5, comportant les dispositions :

- une mémoire (15) tampon est reliée à une source de données et à un destinataire de données par l'intermédiaire de lignes (11, 11') de données et de lignes (12, 12') de commande, les lignes (12) de commande de la source de données produisant une impulsion d'horloge d'entrée et une commande produisant une impulsion d'horloge de sortie pour les lignes (12') de commande du destinataire de données,

- tant la source de données que le destinataire de données sont constitués de manière à émettre et à recevoir des blocs de données de mots de données par des signaux d'horloge associés qui se succèdent directement,

caractérisé en ce que

- un circuit de mesure est relié à l'horloge d'entrée et à l'horloge de sortie,
- le circuit de mesure met à disposition à une sortie le nombre c des impulsions de sortie pour un nombre n prescrit des impulsions d'entrée,
- la sortie du circuit de mesure est reliée à une première entrée d'un circuit de calcul, et le circuit de commande est relié à une deuxième entrée du circuit de calcul par l'intermédiaire de la deuxième entrée duquel le nombre des mots b de données à transmettre est mis à disposition et qui met à disposition à une sortie une valeur qui contient le terme de somme

$$c / (n / b)$$

- la sortie du circuit de calcul est reliée aux circuits de commande qui est constituée de telle manière que, en fonction de la valeur mise à disposition par le circuit de mesure, le transfert de données de la mémoire tampon au destinataire de données est libéré si le nombre x des impulsions de sortie, après le début de la transmission du côté de l'émetteur satisfait la formule

$$x = c / (n / b) - b + e$$

e étant une constante prédéterminée, de préférence par e=1.

7. Dispositif suivant la revendication 6, la valeur c/(n/b)+e étant formée par le fait que, au lieu de l'addition de e, le décompte des impulsions d'horloge d'entrée ne commence pas par zéro, mais par une valeur initiale qui est égale au diviseur n/b à une constante additive près.

8. Dispositif suivant la revendication 6 ou 7, la valeur x de comparaison (19) étant déterminée avant le début du transfert de l'émetteur.

9. Dispositif suivant la revendication 6 ou 7, un compteur (46) décroissant étant, à une entrée, relié aux circuits (44, 45) de calcul qui met à disposition la valeur c/(n/b)+e, le compteur étant chargé par l'intermédiaire d'un signal qui indique le début du transfert du côté de la source de données, et le compteur (46) décroissant étant relié à l'horloge de sortie par l'intermédiaire d'un circuit de libération, si bien que l'horloge de sortie diminue la valeur si le circuit de libération indique le début du transfert du côté de la source de données, et la sortie du compteur décroissant est comparée à la longueur p de paquet et la sortie de ce comparateur (18') est reliée à des commandes qui libèrent le transfert de données vers le destinataire de données si le contenu du compteur décroissant a atteint la longueur b de paquet.

10. Dispositif suivant l'une des revendications 6 à 9, le circuit de mesure comportant un premier compteur qui décompte le nombre n prescrit d'impulsion d'entrée et qui met ainsi à disposition un signal de comptage qui est pris en charge par l'horloge de sortie et ainsi mis en phase avec l'horloge de sortie, qui, pour sa part, est reliée à une entrée de libération d'un deuxième compteur qui compte les impulsions d'horloge de sortie pendant la durée du signal de comptage mis en phase, et le nombre des impulsions d'horloge de sortie plus un étant retransmis comme nombre c au circuit d'ordinateur par ce deuxième compteur, notamment par prescription d'une valeur initiale de un.

**Fig. 1**

EP 0 809 826 B1

Fig. 2
======

Fig. 3
======

```
ClockIn    \_/‾\_/‾\_/‾\_/‾\_/‾\_/‾\_/‾\_/‾\_/

ValidIn    _____/‾‾‾‾‾‾‾‾‾‾‾‾_____

DataIn     _____/‾D0_X_D1__X_D2__X_D3_____

ClockOut   \_/‾\_/‾\_/‾\_/‾\_/‾\_/‾\_/‾\_/‾\_/‾\_/‾

Count      _____/‾‾‾‾‾‾‾‾_____

Ctr (x)    _____/‾1_X_2_____
               |t7  |t8        |t9

ValidOut   _____/‾‾‾‾‾‾‾‾_____

OUTREG     _____/‾D0__D1__D2__D3_____
```

Fig. 4
======

Fig. 5